Europäisches Patentamt

European Patent Office

Office européen des brevets

(19)

(11) EP 0 465 161 B1

(12) EUROPEAN PATENT SPECIFICATION

(45) Date of publication and mention
of the grant of the patent:
04.08.1999 Bulletin 1999/31

(51) Int Cl.6: C10G 11/18, B01J 8/18

(21) Application number: 91305883.0

(22) Date of filing: 28.06.1991

(54) **Method of controlling temperature, yields and selectivity in a fluid hydrocarbon conversion and cracking apparatus and process**

Methode zur Regelung der Temperatur, der Ausbeute und der Selektivität von fluidisierter Kohlenwasserstoffumwandlung und Krackapparatur und -verfahren

Méthode pour contrôler la température, productions et sélectivité dans un appareillage et procédé de conversion et de craquage d'hydrocarbures en lit fluidisé

(84) Designated Contracting States:
BE DE FR GB IT NL

(30) Priority: 03.07.1990 US 548473
03.07.1990 US 548476

(43) Date of publication of application:
08.01.1992 Bulletin 1992/02

(73) Proprietor: EXXON RESEARCH AND
ENGINEERING COMPANY
Florham Park, New Jersey 07932-0390 (US)

(72) Inventor: Sabottke, Craig Young
Morristown, New Jersey (US)

(74) Representative: Somers, Harold Arnold et al
ESSO Engineering (Europe) Ltd.
Patents & Licences
Mailpoint 72
Esso House
Ermyn Way
Leatherhead, Surrey KT22 8XE (GB)

(56) References cited:
EP-A- 0 208 609        EP-A- 0 227 864
EP-A- 0 444 859        US-A- 4 434 049
US-A- 4 575 414        US-A- 4 793 913

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention is directed to a process unit and process for controlling reactor temperature and product yield and/or quality in a fluid hydrocarbon non-catalytic (i.e.: thermal) conversion and cracking process. In particular, the invention is directed to a process unit and process wherein the introduction of feed into a fluid hydrocarbon non-catalytic conversion and cracking zone is effected by feed injectors which optimize the atomization of the feed in order to achieve reactor temperature control and product yield and/or quality objectives.

It has now been found that by varying the atomization of the feed introduced into a reactor, in conjunction with appropriate control instruments, it is possible to obtain an additional degree of freedom to control and optimize the reactor temperature and/ or carbon and heat balance in a fluid hydrocarbon non-catalytic conversion and cracking process. Further, by means of a new kind of variable atomization means feed injection apparatus, the degree of atomization of the feed into a fluid hydrocarbon conversion and cracking zone can be readily varied in real time on a continuous basis, which atomization in turn will affect the endothermic heat of non-catalytic conversion and cracking requirements of the reaction system. The effect of varying feed atomization results in small and subtle changes in the coke producing tendency (coke selectivity) and can be used to control the carbon balance and related heat balance of the process. Further by means of a new kind of variable atomization means feed injector apparatus, a preselected optimal feed liquid droplet size, and/or droplet size distribution, and/or spray pattern can be maintained as desired to control and effect the (a) reactor temperature and/or carbon and heat balance of the reactor system or (b) the reactor product yield and/or quality.

BRIEF DESCRIPTION OF THE DRAWINGS

The process and apparatus of the invention will be more clearly understood upon reference to the detailed discussion below in conjunction with the drawings wherein:

FIG. 1 schematically illustrates one embodiment of a prior art unit for fluid coking (non-catalytic conversion and cracking) with gasification, to which the present invention is applicable;

FIG. 2A is a flow diagram of a hydrocarbon non-catalytic conversion and cracking riser reactor comprising a product yield control system according to the present invention;

FIG. 2B is a flow diagram of a hydrocarbon non-catalytic conversion and cracking fluid bed reactor comprising a product yield control system according to the present invention;

FIG. 3 is a schematic diagram of a variable atomization means reactor feed injector assembly according to one aspect of the present invention;

FIG. 4 is a schematic diagram, in greater detail, of the nozzle atomization adjustment assembly portion of the feed injector in FIG. 3;

FIG. 5 is a front view of the premixer portion of the nozzle atomization adjustment assembly of FIG. 4;

FIG. 6 shows in greater detail a nozzle atomization adjustment assembly while positioned within a variable throat converging fan nozzle geometry; This specific type is used for illustration only.

FIG. 7 is a typical graph of percent stroke versus flow area for the nozzle portion of a variable throat converging fan feed injector of the type depicted in FIG. 3;

FIGS. 8A and 8B are schematic diagrams of the feed injectors depicted in FIG. 2A and FIG. 2B shown attached to a wall of either the riser portion (FIG. 8A) or the reactor fluid bed portion of the hydrocarbon non-catalytic conversion and cracking reactor (FIG. 8B);

FIG. 9 shows a graph of a typical feed injector droplet size distribution and droplet velocity distribution;

FIG. 10 (parts A and B) is a flow chart illustrating a computer application program for carrying out a preferred embodiment of the invention according to Example 2 below.

In general, a degree of feed atomization characterized by a smaller average droplet size, narrow droplet size distribution, and well dispersed spray pattern will result in less coke and less dry gas, thereby tending to maximize liquid yields. As a suitable base point, the atomization of the feed into relatively fine droplets may be selected to match the size and distribution of the solid particles employed in the reaction zone. On the other hand, a larger relative average droplet size and wide distribution, including a portion of droplets significantly larger in size than average, and a spray pattern not well dispersed, can result in a significant increase in coke formation. Subtle changes in atomization therefore can be used to change the coke yield, thereby changing the carbon balance and temperature. The selected degree of atomization will depend on the process objectives.

To maximize high value products such as naphtha and light distillates, atomization of the feed into relatively fine droplets may be selected to match the size and distribution of the solid particles employed in the reaction zone. On the other hand, a larger relative average droplet size and wide distribution, including a portion of droplets significantly larger in size than average, and a spray pattern not well dispersed, can result in a significant increase in coke formation. The selected degree of atomization will depend on the process objectives. For example, in order to maximize LPG and naphtha, a fine droplet size may not be ideal.

Adjusting the atomization of the feed into a fluid hydrocarbon conversion and reaction zone can be used to compensate for changing product yield and/or quality objectives in a multivariable constraint control, LP control or non-linear LP control environment. As product values change in the market place, the reactor yield can be changed to optimize the economic benefit of this process unit to the refineries overall operation. This is extremely important where on-stream blending is conducted.

A common yield objective is to maximize a liquid yield and a common quality objective is to maximize naphtha research octane number. Another objective might be to maximize the production of 650°F minus liquids. Other objectives could be to minimize coke yield and dry gas yield to maximize the throughput of higher value products.

The present process is applicable to feeds that are either newtonian or non-newtonian fluids. In general, a VR (vacuum residuum) feed to a hydrocarbon non-catalytic conversion and cracking process behaves as a newtonian fluid. Although high boiling resid feed components and cracked recycle stocks which can be part of the total feed stream sent to the feed injectors may exhibit some non-newtonian characteristics, the assumption that the feed generally behaves as a newtonian fluid is considered reasonable and adequate insofar as equipment design is concerned.

An oil-only feed may be "pressure atomized" and/or sprayed into the reactor. However, in the preferred operating mode, a lower molecular weight media is injected into the oil feed. Suitable media include hydrogen, steam, nitrogen, low molecular weight reactor off-gas, and $C_6^-$ hydrocarbons. Most preferably, a steam/oil mixture is used as the feed stream to the reactor. In a preferred embodiment, this steam/oil mixture is passed through a variable throat feed injector nozzle. The ratio of steam/oil can be adjusted during operations based on changes in oil feed type and properties. The amount of steam in the mixture influences the density of the mixture and will therefore have an impact on atomization. General commercial practice, suitable with the present process, is to use about 0.50 wt.% steam for light feed types and about 3.0 to 5.0 wt.% steam for heavy, more viscous feed types.

In a fluidized hydrocarbon non-catalytic conversion and cracking process, the initial contacting of oil feed with the solid particles and how this contacting is carried out influences the reactor product yields and qualities and the associated endothermic heat of reaction required. Initial contacting can be viewed as a localized zone (control volume) in the reactor system, typically consisting of a steam/oil/solid particle mixture (emulsion). By adjusting the steam/oil ratio and atomization (oil liquid droplet size, droplet size distribution, and/or spray pattern), the reaction pathway can be controlled or influenced in accordance to the present invention. It is desirable to optimize the atomization for a given set of reactor inputs or outputs.

A good indicator or measure of the state of atomization of the feed handled is the pressure drop $\Delta P$ across the nozzle of the feed injector. Alternatively, a parameter related to nozzle pressure drop can be used as a measure of atomization. For example, pressure drop is directly related to nozzle cross-sectional area in the preferred feed injectors of the present invention. The nozzle resistance coefficient, defined below in the examples, is also a good measure of atomization. Data relating nozzle droplet size, droplet size distribution and spray pattern to nozzle resistance coefficient, $\Delta P$, or the like can be obtained experimentally, as detailed below in the examples.

Correlations can also serve as a basis for making estimates of the performance of a particular variable throat feed injector design. Nozzle geometry can effect spray pattern, liquid droplet size and droplet size distribution, and is therefore reflected in the nozzle resistance coefficient.

As mentioned earlier, the desired degree of atomization may depend on a variety of process or operating objectives. For example, atomization of the feed into a conversion and cracking zone can be selected to compensate for changing reactor temperature and/or carbon and heat balance as well as product yield and quality.

The degree of atomization may be used as a control variable changing in real time. For example, reactor temperature can be varied by varying the degree of atomization. It is believed that the droplet size and droplet size distribution are important factors in achieving yield and selectivity objectives. The use of variable atomization feed injectors to control yield and selectivity in a fluid catalytic cracking unit (FCCU) is described in filed U.S. Patent Application Serial No. 485,701 (Docket No. OP-3499), hereby incorporated by reference. The use of variable atomization feed injectors to control the carbon balance in a FCCU is described in filed U.S. Patent Application Serial No. 486,046 (Docket No. OP-3545), hereby incorporated by reference. The use of variable atomization feed injectors to respond to changing feeds and flows thereof is described in U. S. Patent Application Serial No. 486,035 (Docket No. OP-3498) hereby incorporated by reference.

The preferred means of controlling the feed atomization is by monitoring the injector nozzle pressure drop $\Delta P$, for example, by means of a pressure transducer or controller (PdRC), and sending a signal based thereon to an actuator associated with a variable (movable) throat feed injector. Suitably, a PdRC can be operated in a simple single control loop mode holding a target nozzle pressure drop. Alternatively, the PdRC can be combined in a more complex control configuration.

In a simple single control loop mode, a PdRC target pressure drop is set to achieve a desired feed atomization. The unit operator would monitor, in an "open loop" control mode, the effect that various PdRC set points have on the reactor temperature and/or carbon and heat balance. The PdRC set point would be selected based on plant response trends to optimize the feed atomization (including spray pattern, droplet size and droplet size distribution) relative to reactor temperature control objectives. Alternatively, another parameter, such as nozzle flow area, which is related to $\Delta P$, can be employed as a measure of feed atomization. The nozzle coefficient of resistance, "CF" defined in the examples below, is a good measure of feed atomization. Data relating nozzle droplet size, droplet size distribution and spray pattern to nozzle resistance coefficient and $\Delta P$ can be experimentally developed. In a similar fashion, $\Delta P$ can be related to reactor carbon and heat balance shifts for the fluid hydrocarbon non-catalytic conversion and cracking reactor. Preferably, each particular reactor can be tested to empirically develop such relationships and correlations. The control response of each reactor system can be unique because of the actual vendor equipment used to construct it. Process models may also be used to establish these relationships. Example 3 below illustrates a computer control model.

The preferred means of controlling the atomization of the feed is by monitoring the injector nozzle pressure drop $\Delta P$, for example, by means of a pressure transducer and pressure controller (PdRC), and sending a signal based thereon to an actuator associated with a variable atomization means feed injector. The actuator works by moving a shaft over a narrow stroke range. At the distal end of the shaft, an atomization adjustment means, positioned in a hydrocarbon flow section of the feed injector, works by varying the cross-sectional flow area available for flow of the feed into the reaction zone.

Application of variable throat feed injectors to an fluidized hydrocarbon conversion and cracking process allows for new control configurations for controlling the process carbon balance, heat balance, and reaction zone temperature and/or heater zone temperature. A direct cascade of reactor temperature (TRC) to the pressure control (PdRC) associated with the feed injector nozzle is possible. The feed injector atomization is adjusted to optimize and control the reaction zone temperature. It is also possible to have a higher level control configuration where reactor TRC, nozzle pdRC and vessel and/ or slide valve PdRC are configured to control and optimize reactor temperature in a layered hierarchy.

Traditional control modes, which may be practiced in combination with the teachings herein disclosed, are as follows:

a. Reactor temperature cascaded to the reactor/heater differential pressure which controls hot (coke) solid particle circulation into the reactor.

b. Reactor temperature cascaded to the hot solid particle transferline slide valve which controls solid particle circulation.

c. Reactor temperature cascaded to the cold solid particle transferline slide valve which controls solid particle circulation.

d. Reactor temperature cascaded to the preheat temperature (furnace coil outlet temperature or COT) which controls feed temperature to the reactor.

It is possible to have the reactor temperature cascaded in a layered hierarchy to nozzle PdRC and another controller. A preferred approach would be to have reactor temperature cascaded in a layered hierarchy to nozzle PdRC and to transferline slide valve differential pressure. Such a layered hierarchy would be structured such that suspended solid particle circulation (controlled by transferline slide valve differential pressure) would only be used for gross/large changes in reactor temperature, for example, a change from 950 to 975°F. These gross changes in set point would probably be the result of a multi-variable constraint controller being used to optimize the reactor operation. Small changes in reactor temperature could be achieved by subtle feed atomization changes achieved by a nozzle differential pressure controller and an application package. From a process dynamic perspective, such control should provide more precise reactor temperature control.

Alternatively, fluidized solid particle circulation and preheat can be fixed and changes in the atomization of the feed, that is, changes in the liquid droplet size and/ or the size distributions of the liquid droplets and/or spray pattern can be used to influence the reactions in the endothermic reaction system of the fluid hydrocarbon non-catalytic conversion and cracking process. The reactor yields influence the amount of heat needed for the non-catalytic conversion and cracking reactions to occur. For a fixed heat input from the circulating solid particles and feed preheat, and with a target reactor temperature to maintain gross yield objectives, it is viable to change the feed atomization in subtle amounts to control reactor temperature and to compensate for process variations in feed quality and/ or solid particle quality.

Application of variable throat feed injectors to a fluidized hydrocarbon non-catalytic conversion and cracking process also allows for new control configurations for controlling product yields and quality. Reactor product yield and/ or quality information may be cascaded to the pressure control (PdRC) associated with the feed injector nozzle, and the feed injector atomization adjusted to optimize yield and/or quality objectives. It is also possible to optimize critical (economically important) product yields for changes in feed quality and other process inputs.

For a typical maximum clean liquid product operation, a preferred high level control configuration might be as follows. Reactor temperature can be controlled by traditional means to maintain the clean liquid product yield in an approximate target zone. Clean liquid product flows can be used to calculate a clean liquid product selectivity parameter (clean liquid product flows divided by fresh feed flow is a simple definition of clean liquid product selectivity). This calculated selectivity parameter can be used as a basis for adjustments to the feed atomization to optimize clean liquid product selectivity. A control application package developed for this purpose would make adjustments in feed atomization to achieve a maximum clean liquid product selectivity (a feedback control loop).

In a single stage transferline reaction system, the preferred location of a level or ring of variable throat feed injector nozzles is at the inlet to the reactor riser (sometimes also called the transferline reactor). Suitably, a number of nozzles are uniformly distributed around the perimeter of the reactor riser to insure good solid particle/oil contacting and mixing.

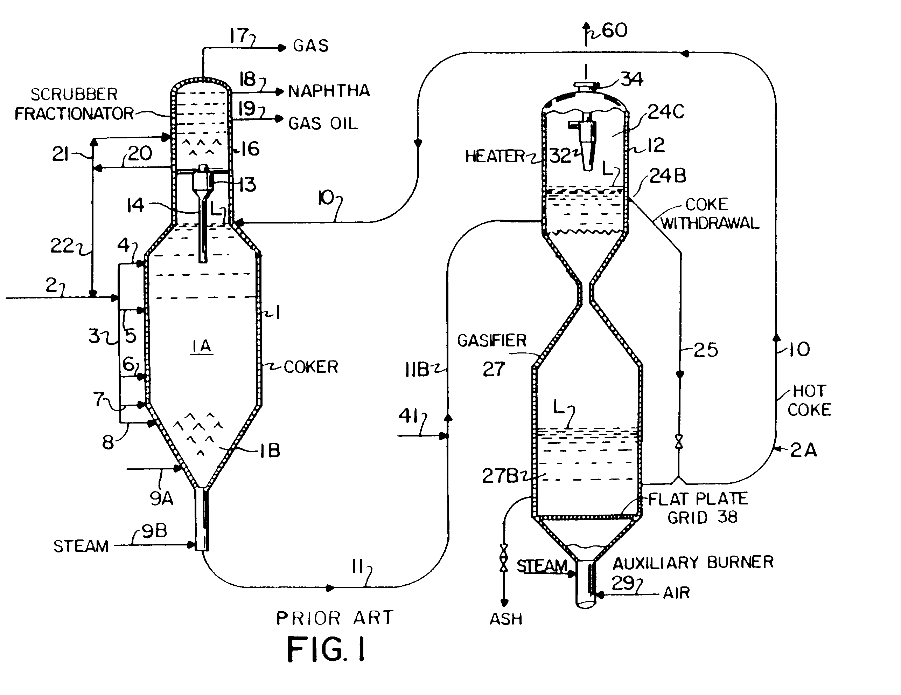

Referring now to FIG. 1, there is shown a vertically arranged cylindrical reactor 1 containing a reaction zone 1A comprising a fluidized bed of solid coke particles, in which bed a hydrocarbon feed-stock introduced at lines 2-8 is undergoing non-catalytic conversion and cracking. Hydrocarbon feedstocks that can be suitably employed in a fluid coking with gasification process include heavy hydrocarbonaceous oils; heavy and reduced petroleum crude oils; petroleum atmospheric distillation bottoms, petroleum vacuum distillation bottoms; pitch; asphalt, bitumens, and other heavy hydrocarbon residues; tar-sand oils; shale oils; liquid products derived from coal liquification processes, including coal liquification bottoms, coal; coal slurries and mixtures therof; and the like. Such feedstocks may be employed singly, separately in parallel reaction zones, or in any desired combination. Hydrocarbon gas and vapors passing through the reaction zone 1A maintain the solid particles in a turbulent fluidized condition having the appearance of a boiling liquid.

In reaction zone 1A, the solid particles becomes spent during contact with the hydrocarbon feedstock due to the deposition of new coke from feed. Thus, the terms "spent" or "coke-contaminated" solid particles as used herein generally refer to solid particles which have passed through a reaction zone and which contains a sufficient quantity of new coke from feed thereon to cause significant activity loss, thereby requiring the removal of coke burn off and/or gasification to restore the process efficiency and performance of the solid particles. Typically, the incremental coke content of the spent solid particles which must be burned off or gasified varies from about 0.50 to about 25.0 wt.%. The regenerator heater and gasifier maintains the size and activity of the seed coke or ore by removing this incremental feed derived coke which is relatively inactive.

Prior to actual regeneration by either burn-off or gasification, the spent solid particles are usually passed from the reaction zone into a stripping zone 1B, below a fluidized bed level indicated at L, and contacted therein with a stripping gas, which is introduced into the lower portion of zone 1B via line 9A and 9B. The stripping gas, which is usually introduced at a pressure of from about 10 to about 150 psig, serves to remove most of the volatile hydrocarbons from the spent solid particles. A preferred stripping gas is steam, although nitrogen, other inert gases or flue gas may be employed. Normally, the stripping zone is maintained at essentially the same temperature as the reaction zone, i. e., from about 850°F to about 1100°F.

Stripped spent solid particles from which most of the volatile hydrocarbons have been stripped therefrom is then passed from the bottom of stripping zone 1B, through a spent solid particle transfer line, such as J-bend 11 and interconnected vertical riser IIB, which extends into the lower portion of a heater 12.

Riser 11B is shown entering the heater 12 off-center to avoid interference with the heating gas/air mixture from section 27 of the gasifier zone. In the embodiment shown, only one riser 11B is utilized. It is, however, within the contemplation of the subject invention that a plurality of risers may be used.

Air may be added to riser 11B through line 41 in an amount sufficient to reduce the density of the solid particles flowing therein, thus causing the solid particles to flow upward into the heater 12 by simple hydraulic balance.

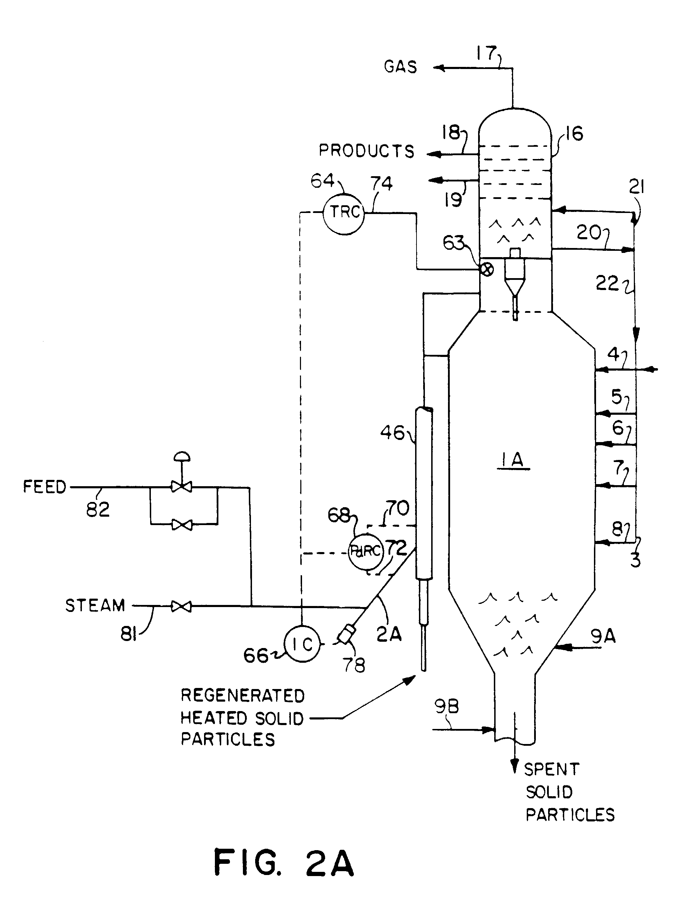

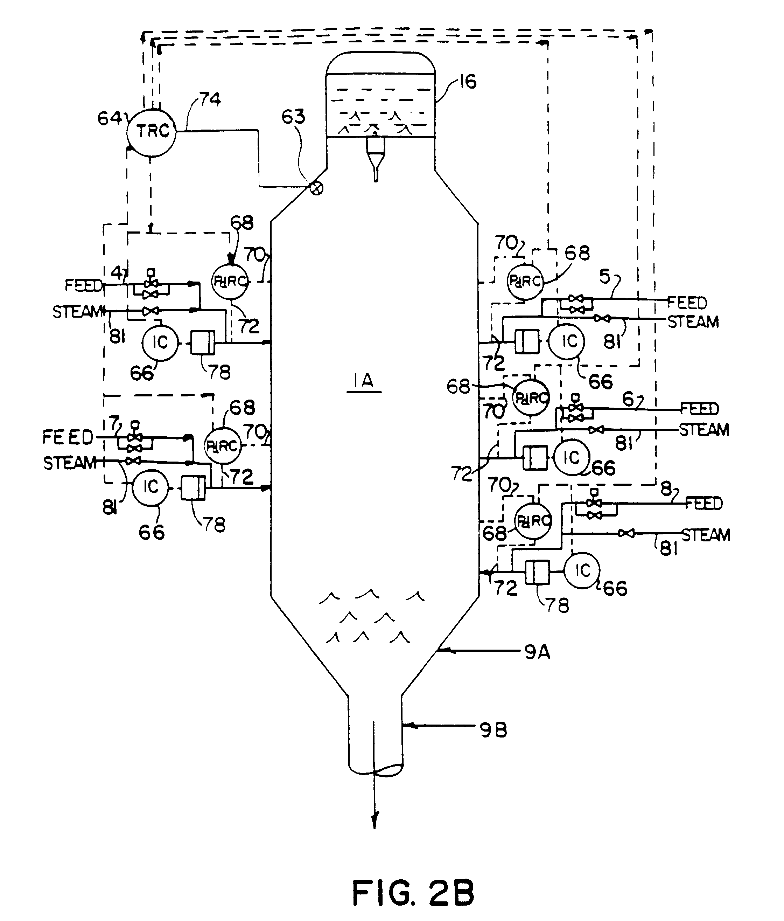

In the particular configuration shown in FIG. 1, the heater/regenerator 12 is a separate vessel (arranged at approximately the same level as the reactor product scrubber fractionator 16) containing a dense phase fluidized bed 24B of solid particles having a level indicated at L, which is undergoing regeneration to burn off coke deposits formed in the reaction zone during the non-catalytic conversion and cracking reaction, above which is a dilute phase 24B. An oxygen-containing gas enters the lower portion of gasifier regeneration zone 27 via line 29 and passes up through a grid 38 and the dense phase fluidized solid particle bed 27B, maintaining said bed in a turbulent fluidized condition similar to that present in reaction zone 1A. As will be discussed in more detail with respect to FIG. 2 hereinbelow, the present invention resides in an improved system of process control involving the introduction of feed into a non-catalytic conversion and cracking zone which, in this particular design, is located within the coker reaction zone 1A.

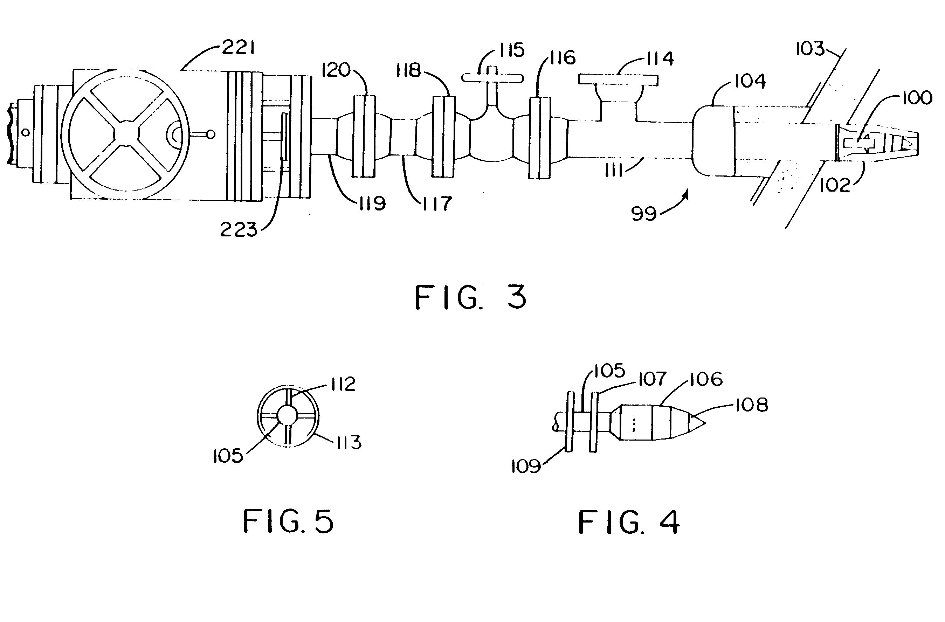

Regenerated solid particles from the dense phase fluid bed 24B in the heater/regeneration zone 12 flows downward through standpipe 25 and passes through a J-bend into the reaction zone 1A by way of the transfer line 10 which joins the J-bend at the level of the alternate oil injection line 2A above the J-bend. By regenerated solid particles is meant solid particles leaving the various regeneration, heater and gasification zones which has contacted an oxygen-containing gas causing at least a portion, preferably a substantial portion, of the coke present on the solid particles to be removed, where said coke has been derived from the hydrocarbon feed to the process. The hydrocarbon feedstock for the non-catalytic conversion and cracking process is injected into the reactor 1 through lines 2 to 8 via special feed injectors, to be described in detail below with reference to FIG. 3, to form an oil and solid particle mixture which is passed into the reactor 1 within the reaction zone 1A. Product vapors containing entrained solid particles pass overhead from the reaction zone 1A into a gas-solid separation means 13 wherein the entrained solid particles are separated therefrom and returned through diplegs 14 leading back into the reaction zone 1A. The product vapors, before exiting in lines 17-19, are then conveyed through a scrubber fractionator section 16 into the product recovery system. A liquid draw-off in line 20 provides, in line 22, recycle of coker fractionator bottoms and, in line 21, quench from super-heated vapors.

In regeneration/heater zone 12, gases formed during regeneration/gasification of the spent solid particles can pass from the dense phase fluid bed 24B into the dilute phase 24C along with entrained solid particles. The solid particles are separated from the gas by a suitable gas-solid separation means 32 and returned to the dense phase fluid bed 24B. The substantially solid particle-free gas then passes into a plenum chamber 34 prior to discharge from the regenerator/heater 12 into down stream gas handling equipment through line 60.

It will be readily appreciated by those skilled in the art that the present invention may be applied beneficially to any type of fluid hydrocarbon non-catalytic conversion and cracking process unit with little or no modifications and without limitations as to the spatial arrangement of the various reaction, stripping, and the various regeneration, heating, and gasification zones thereof.

A better understanding of how the present invention may be applied to control reactor temperature in the fluid coking with gasification unit may be obtained by reference to FIG. 2A, which shows the reaction portion of the fluid coking and gasification unit in isolation from the heater and gasifier portion and in conjunction with certain process control instrumentation and signals. The control system and equipment are in itself conventional, as will be readily appreciated by those skilled in the art and, therefore, are shown only schematically. The numbers in FIG. 2 which are less than or equal to 52 are the same as the numbers in FIG. 1 and correspond to the same parts.

Although schematically showing the alternate feed injectors by a single line 2A in FIG. 2A, this embodiment actually employs a plurality of feed injectors. In three dimensions, there are typically three or more (3 to 20) feed injectors horizontally spaced, on the same level, around a circumference of the riser. For reactor temperature control purposes, a reactor temperature controller 64 can be cascaded to a feed injector controller 66. Alternatively, the reactor temperature controller 64 can be cascaded to the differential pressure controller 68, which in turn is cascaded to the same feed injector controller 66 to maintain a target level of atomization.

As evident in FIG. 2 and the above detailed description of the invention, the differential pressure controller 68, measures the pressure drop across a portion of the feed injector, suitably the difference between the pressure, as measured by line 70, within the riser 46 just outside the nozzle tip of the feed injector, and the pressure, as measured by line 72, at a point within the injector just prior to the nozzle throat section that is varied, as explained below with respect to FIG. 3. The pressure controller includes a comparator for measuring the difference with a target set point, typically 100 to 150 psi (0.6895 to 1.0343 MPa).

A temperature measuring device 63, measures in real time the temperature of the gaseous effluent product from the reaction zone 1A, and a signal based thereon is sent via line 74 to the temperature controller 64. As mentioned above, a signal based on the calculated reactor temperature difference from set point can be cascaded either directly to the injector controller 66, or in a layered hierarchy to the differential pressure controller 68, which in turn is cascaded to feed injector controller 66.

In addition, an acoustic measuring device can be employed for the purpose of monitoring the feed atomization. When alternatively or additionally monitoring the properties of the feed, conventional analytical instrumentation can be employed. For example, the API gravity or refractive index may be measured. Feed composition and/or properties may be measured with infrared, ultraviolet, or mass spectroscopy. High pressure liquid chromatography may be employed to separate components of the feed.

The injector controller 66 is used to preferably individually adjust the pressure drop across a plurality of feed injectors. In each case an actuator 78 is employed to vary the position of suitable atomization adjusting means (not shown). In this embodiment, a movable member is employed to vary the cross-sectional flow area of a throat section of the feed injector and, thereby, the pressure drop. Steam via line 81 is introduced into the feed injector for admixture with the feed oil in line 82 to produce a steam-oil mixture in line 80.

Additional clarification of how the present invention may be applied to control the reactor temperature from the fluid coking with gasification unit may be obtained by reference to FIG. 2B, which shows the reaction portion of the fluid coking and gasification unit in isolation from the heater and gasifier portion and in conjunction with certain process control instrumentation and signals. The control system and equipment are in itself conventional, as will be readily appreciated by those skilled in the art and, therefore, are shown only schematically. The numbers in FIG. 2B which are less than or equal to 52 are the same as the numbers in FIG. 1 and correspond to the same parts.

Although schematically showing the primary feed injectors at each level by a single lines 4, 5, 6, 7,and 8 in FIG. 2B, this embodiment actually employs a plurality of feed injectors at each level. In three dimensions, there are typically three or more (3 to 20) feed injectors horizontally spaced, on the same level, around a circumference of the coker reactor vessel. For reactor temperature control purposes the controller 64 can be cascaded to a feed injector controller 66. Alternatively, the reactor temperature controller 64 can be cascaded to the pressure controller 68, which in turn is cascaded to the same feed injector controller 66 to maintain a target level of atomization.

As evident in FIG. 2B and the above detailed description of the invention, the pressure controller 68, measures the pressure drop across a portion of the feed injector, suitably the difference between the pressure, as measured by line 70, within the reaction zone 1A, just outside the nozzle tip of the feed injector, and the pressure, as measured by line 72, at a point within the injector just prior to the nozzle throat section that is varied, as explained below with respect to FIG. 3. The pressure controller includes a comparator for measuring the difference with a target set point, typically 100 to 150 psi (0.6895 to 1.0343 MPa).

A temperature measuring device 63, measures in real time, the temperature of the components of the gaseous effluent product streams in reaction zone 1A of the reactor outlet, and a signal based thereon is sent via line 74 to a product controller 64. A signal based on the calculated temperature difference from set point can be cascaded either directly to the injector controller 66, or in a layered hierarchy to the pressure controller 68, which in turn is cascaded to feed injector controller 66.

Alternately, device 63 will be a flow sampling device located within the scrubber fractionator section 16 (not shown), with an outlet to a measuring device, for example a conventional spectroscopic analyzer 65 (not shown). Flow sampling device 63 measures in real time, the concentration of at least one of the components of the gaseous effluent product streams from the reactor and a signal based thereon is sent via line 74 to a product controller 64. A high pressure liquid chromatograph may be used to separate the components of the product stream before measurement. The controller can calculate a yield or quality index and by means of a comparator, the measured yield can be compared to a set point. A signal based on the calculated yield or difference from set point can be cascaded either directly to the injector controller 66, or in a layered hierarchy to the pressure controller 68, which in turn is cascaded to feed injector controller 66.

The injector controller 66 is used to preferably individually adjust the pressure drop across the feed injectors. In each case an actuator 78 is employed to vary the position of suitable atomization adjusting means (not shown). In this embodiment, a movable member is employed to vary the cross-sectional flow area of a throat section of the feed injector and, thereby, the pressure drop. Steam via line 81 is introduced into the feed injector for admixture with the feed oil.

Referring to FIG. 3, a typical embodiment of an reactor feed injector according to the present invention is shown, generally designated 99. This injector comprises at one end a nozzle tip 102. A fixed throat nozzle geometry is shown, it being understood that various nozzle geometries are quite possible.

The feed injector is connected to wall 103 of the reactor by what is termed a "thermal sleeve" arrangement 104. As evident, the feed injector assembly is an integral part of the reactor system. Other mechanical attachment arrangements will be familiar to those skilled in the art.

A feed injector nozzle atomization adjustment assembly, generally designated 100, comprising a shaft 105 and a lead portion or adjusting means 106, is shown in greater detail in FIG. 4. An end tip portion 108 of this adjusting means 106 is designed to function within the converging fan tip nozzle 102. Modulation and/or positioning of the end tip portion 108 within the nozzle tip 102 will change the flow area and influence the atomization achieved by the nozzle tip 102. A preferred addition to the basic design of the variable atomization adjustment means feed injector is to include premixers 107 and 109 in close proximity to the nozzle insert tip 106. The premixers enhance the atomization, particularly the spray pattern, achieved by the variable atomization adjustment means feed injector. The embodiment of a reactor feed injector assembly shown in FIG. 3 represents a minimum stroke design.

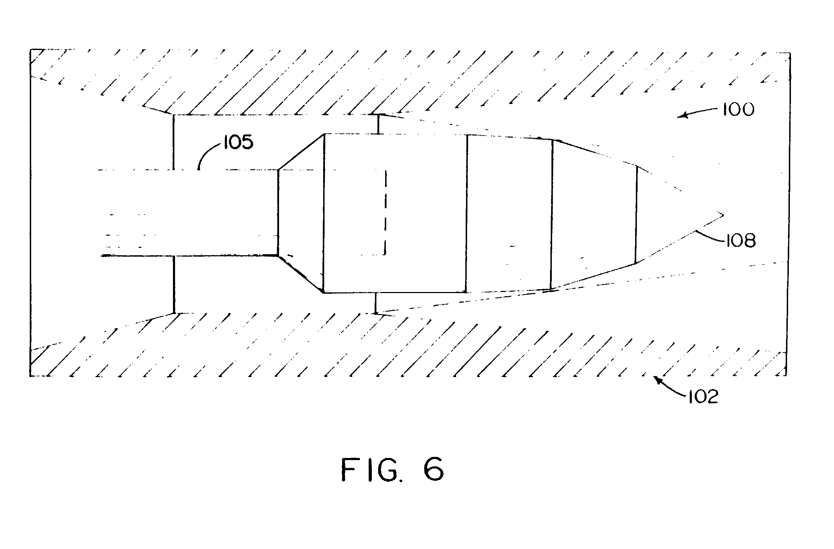

The two premixers 107 and 109 are staggered on a 45° offset and act as static mixers, slug/bubble breakers, fluid vibration dampeners and radial flow, swirl flow enhancers. From a fluid flow perspective, they impart a radial or swirling moment to the otherwise axial flow. This enhances the atomization achieved by the nozzle. If the flow regime of the fluid in the process pipe leading to the feed injector should happen to fall into an unattractive regime, such as slug flow, the premixers will serve as slug/bubble breakers and help supply a more homogeneous fluid phase mixture immediately upstream of the variable atomization means nozzle. This will also help enhance the atomization achieved by the nozzle. The premixers 107 and 109 also assist in alignment of the shaft 105 and atomization adjusting means 106 within the nozzle 102 and process piping 111. The details of a premixer are shown in cross-section in FIG. 5, wherein it is seen that spokes 112 radially emanate from shaft 105 and join a circular rim 113.

In the particular injector assembly configuration shown in FIG. 3, a mixture of steam and oil is introduced upstream of the nozzle tip 102 through a steam oil fluid inlet 114. Because of oil partial pressure effects in the reactor, it is generally preferred to use an atomization enhancement medium such as steam to help assist in oil atomization, although other gases could be used. However, the variable throat feed injector could operate with oil-only feed, in a mode to pressure atomize/spray oil without steam being used. The atomization enhancement medium could alternatively be introduced into the reactor through separate connections. However, in a typical operating method for this variable atomization means feed injector, a steam/oil mixture is formed upstream of the nozzle by flow controlling the steam/oil ratio. The steam/oil ratio will be set based on oil properties and other process considerations. The oil phase may be partially vaporized as a result of preheating. Thus, the fluid mixture being supplied to the feed injector assembly will usually consist of a gas phase, a liquid oil phase and possibly a vapor oil phase.

To conserve on system size, an isolation valve 115 between flanges 116 and 118 may be used as part of the feed injector assembly to allow for onstream maintenance of the system. This isolation valve is usually a gate valve, although other valve types such as a ball valve may be used. The atomization adjusting means assembly for the nozzle can be retracted, the isolation valve closed and the assembly removed as required for on-stream maintenance. For example, if feed type and chemistry should cause undesirable coking or partial plugging of the nozzle inside, the nozzle insert shaft assembly can be removed and subjected to onstream cleaning.

A nozzle maintenance receiver pipe section 117, suitably a spool section of piping, is provided between the isolation valve 115 and flange 120. A spool section 119 holding a conventional packing gland allows for modulation of a throat insert employed as an atomization adjusting means. A low leak design is preferred, although various packing gland designs are acceptable. This spool section also allows for on-stream cleaning and maintenance of the nozzle atomization adjustment assembly. It will be appreciated that simplified injector assembly designs are optional, if on-stream maintenance or cleaning is not a concern.

A suitable mechanical positioning means is exemplified by actuator assembly 221, which provides for the mechanical movement, modulation and stroke control of the nozzle atomization adjustment assembly and shaft. Control of the relative position of the nozzle atomization adjustment assembly relative to the nozzle tip 102 influences the atomization and/or spray pattern from the nozzle. In a typical design, a pneumatic actuator with a manual override feature (hand wheel operator) is employed. Other actuator configurations are also acceptable, including a hydraulic actuator or motor-driven actuator. The actuator is capable of receiving control instructions from other instruments and controllers and moving the position of the atomization adjusting means based on these control instructions.

Generally, pneumatic actuators will be preferred over hydraulic actuators because of relative cost, and pneumatic or hydraulic actuators preferred over other types because of reliability. However, unit specific factors may influence actuator selection.

A shaft coupling 223, a bolted flange type, is shown to mate the shaft of the adjustment assembly 100 to the actuator assembly 221. Various shaft coupling designs are acceptable.

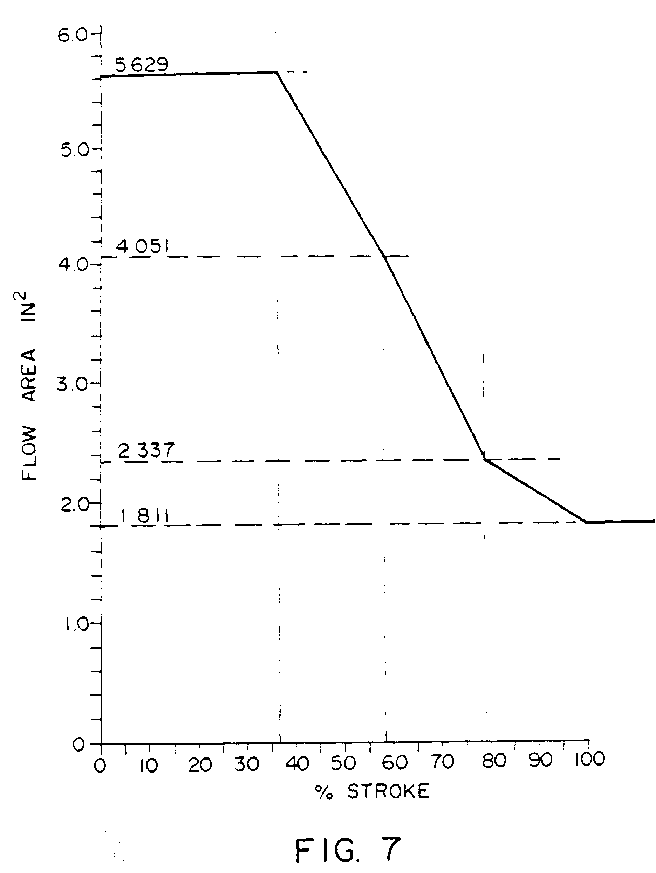

FIG. 6 shows in greater detail nozzle adjustment assembly 100 (without premixers), positioned at the distal end of shaft 105 and inserted into fan nozzle 102. A tip portion 108 of the nozzle adjustment adjusting means 106 is shown at its estimated maximum insertion point. FIG. 7 shows a graph, for a typical variable atomization means nozzle, wherein the flow area is plotted against the percent stroke of the shaft used to move the nozzle atomization adjustment assembly by its actuator.

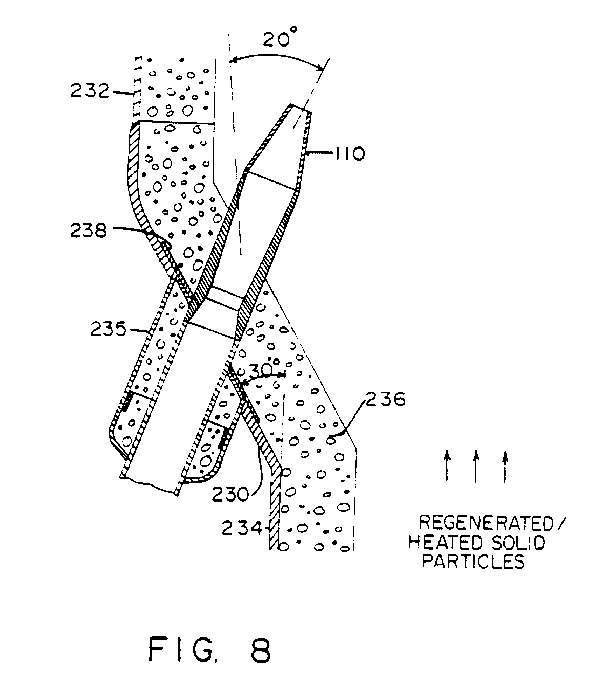

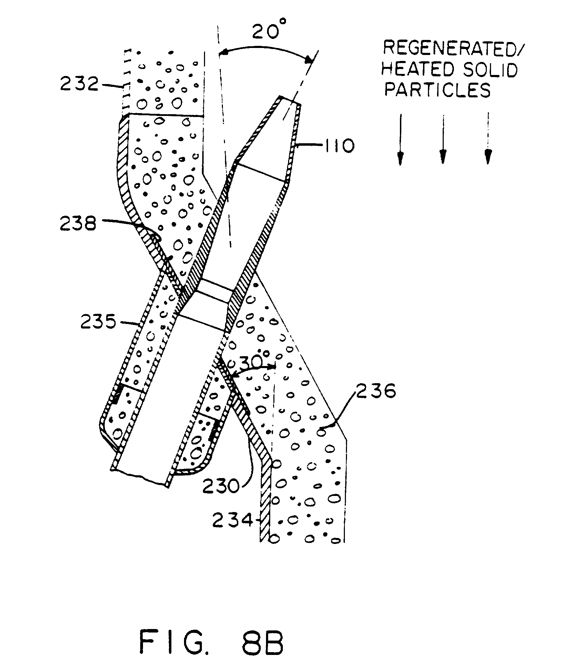

FIGS. 8A and 8B show in detail an installation of a typical feed injector attached to the wall of either a reactor riser (FIG. 8A) or the reactor fluid bed portion of the reactor (FIG. 8B). The nozzle tip portion 110 is shown positioned at a typical angle of 20 degrees to the vertical. The feed injector is shown in cross-section transversing a conical segment shaped wall 230 section which itself is at a 30 degree angle from the vertical, between an upper relatively larger diameter cylindrical vertical wall portion 232 and a lower relatively smaller diameter cylindrical vertical wall portion 234 of the riser. Different attachment angles and orientation angles may be used depending on the specific unit and type of injector. As evident to those skilled in the art, the installation of the injector is conventional and utilizes a pipe cap 235 and castable lining 236 beneath the metal walls of the reactor apparatus. A kaowool pad plate 238 surrounds the circumference of the feed injector where it pierces the riser wall. Welding at appropriate edges renders the connection airtight. Other mechanical attachment arrangements, known to those skilled in the art, are suitable.

Example 1

This example illustrates tests for collecting data on atomization associated with various nozzle configurations used for feed injection in a fluid catalytic cracking process (not in accordance with the invention). A similar experimental procedure could be used to generate information specific to a fluid coking with gasification process (in accordance with the invention).

Fine droplets and a wide angle spray are expected to provide more rapid and uniform catalyst/oil mixing in the riser and improve the FCCU operation over the existing nozzles. The approach taken in these tests was to conduct cold model tests to examine the effects of liquid viscosity and vapor/liquid flow rates on droplet size, spray dispersion angle, and nozzle pressure drop. Droplet sizes of the sprays were measured with a Laser Doppler Anemometer (LDA). Nitrogen and water/glycerine solutions were used to simulate steam-oil feed. Correlations for predicting the mean droplet size and the pressure drop for a nozzle was developed for use in designing and controlling feed injectors according to the present invention.

Although pressure nozzles, spinning disks and pneumatic nozzles are three basic types of atomizers used in industry, these tests were confined to an investigation of pneumatic nozzles in which a compressible fluid such as air or steam of high velocity is used to disintegrate a liquid jet. The most widely quoted work in pneumatic atomization is a drop-wise correlation by Nukiyama and Tanasawa (Nukiyama and Tanasawa, Trans. Soc. Mech. Engrg., Japan, 6122, 57-58, 1940). This correlation, however, was derived from test data with gas to liquid mass flow ratios on the order of ten compared to the mass flow ratio of about 0.01 used in these tests. For the present conditions, the correlation of Kim and Marshall (K. Y. Kim and W. R. Marshall, Jr., "Drop-size Distribution from Pneumatic Atomizers", AIChE Journal, pp. 575-584, Vol. 17, No. 3, May, 1971) is more suitable and therefore was used to compare the test measurements. Kim and Marshall covered the range of gas-liquid relative velocity from 250 ft/sec to sonic velocity, viscosity 1 to 50 cp, and gas-liquid mass ratio 0.06 to 40. The operating ranges of this test program were relative velocity of 200 to 700 ft/sec, viscosity 1.3 to 2.6 cp, and gas-liquid mass ratio from 0.002 to 0.008. These correlations are described below.

The above ranges for variables fall within the typical commercial operating conditions for many processes such as FCCU (which is not in used in the present invention), and Fluid Coking and Fluid Coking with Gasification which are in accordance with the invention.

Kim and Marshall drop-size correlations for convergent-type pneumatic nozzles were obtained for the following ranges: drop-size, 6 to 350 $\mu$m mass medium diameter; mass flow ratio, 0.06 to 40; relative velocity, 250 ft/sec to sonic velocity, and viscosity 1 to 50 cp.

$$\overline{X}_m = 249 \frac{\sigma^{0.41} \mu_1^{0.32}}{\left(v_{rel}^2 \rho_a\right)^{0.57} A^{0.36} \rho_1^{0.16}} + 1260 \left(\frac{\mu_1^{2\,0.17}}{\rho_1 \sigma}\right) \frac{1}{v_{rel}^{0.54}} \left(\frac{M_a}{M_1}\right)^m$$

where m = -1, if $M_a/M_1$ <3; m = -0.5, if $M_a/M_1$ >3.

$$\overline{X}_{vs} = 0.83 \, \overline{X}_m$$

where:

| | |
|---|---|
| $\overline{X}_m$ = | Mass medium diameter, $\mu$m |
| $\overline{X}_{vs}$ = | sauter mean diameter, $\mu$m |
| $\sigma$ = | Surface tension, dynes/$\mu$m |
| $\mu_1$ = | Liquid viscosity, cp |
| $\rho_a, \rho_1$ = | Gas and liquid densities, lb/ft$^3$ |
| A = | Area, ft$^2$ |
| $v_{rel}$ = | Gas to liquid relative velocity, ft/sec |
| $M_a, M_1$ = | Gas to liquid mass flowrates, lbs/min |

The experimental set-up consisted of a chamber (3 feet square and 6 feet long) equipped with light and viewing windows. The nozzle was mounted at one end of the rig and sprayed in horizontally. A screen at the far end of the rig was used to trap the spray. A liquid feed mixing tank was used to blend glycerine with water to provide the desired viscosity. Still pictures were taken to determine the spray angle and the Laser Doppler Anemometer (LDA) was used to measure drop size.

The LDA technique for sizing spherical droplets is based on the measurement of the relative phase shift that occurs when two light waves pass through the droplets on different paths. By measuring the visibility or amplitude modulation of the interference pattern formed by the scattered light and collected over a finite collecting operation, adequate information to size the droplets can be obtained.

The hardware system comprises the following pieces of equipment: transmitter, receiver, visibility processor, data management system, keyboard, Krohn-hite filter, and Anadex printer. The detailed descriptions of these components are given in "Operation Guide for Droplet Sizing Interferometer," by Spectron Development Laboratories, Inc., SDL No. 82-51025, Costa Mesa, California (1982).

The function of the transmitter is to project two coherent laser beams into a chosen test space where they may be moving droplets. The droplets scatter light from the fringe pattern caused by the crossing beams and the frequency and modulation yield the velocity and size of the measured droplets. In general, it is necessary to perfect the new alignment each time anything is changed, but these adjustments are simple. The "permanent" alignments, which require more care, need only be touched very rarely, if at all.

The transmitter contains a Spectra-Physics Model Number 107 DEM Helium Neon Laser, laser power supply, steering mirrors, a telescopic beam expander, a half wave plate, a beam steering prism, a 50% beamsplitter and interchangeable output optics.

The receiver is essentially a telescope with a photomultiplier to collect light from the focal point, at which there is an interchangeable pinhole. The positioning of the entire assembly is so as to align it approximately with the transmitted probe volume. The receiver collects light that has been scattered from anything within the illuminated sample volume and directs it on to the cathode of the photomultiplier.

The Visibility and Doppler Signed Processor is a microprocessor which produces particle size information from optical data transmitted from the receiver.

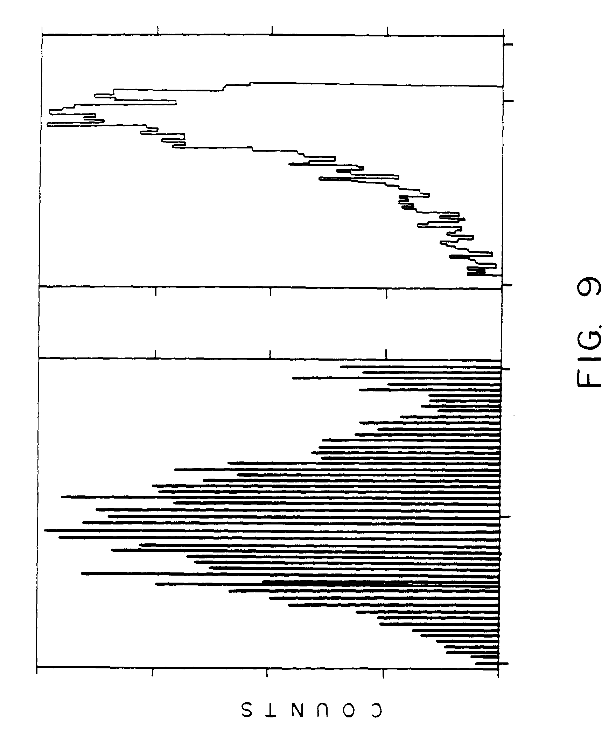

An Apple-II Plus was used to collect and process data. FIG. 9 illustrates a typical droplet size distribution and a droplet velocity distribution. The output also includes linear mean diameter, surface mean diameter, volume mean diameter, sauter mean diameter, and droplet mean velocity.

Three different test nozzles (numbered 1, 2, and 3) were studied, wherein drop size and spray angle associated with each of the three nozzles were measured at various vapor/liquid feed rates. Sauter mean diameter of drops with nozzles nos. 1 and 2 were all greater than 1000 μm (Run 1-6 and 17-21). The drop size measurement with LDA was restricted to 1000 μm or smaller due to the narrow angle of laser beams achievable through the tank windows.

The distribution of drop sizes with nozzle no. 3 appear to be wide and bimodal. A complete first mode and part of the second mode were recorded in the sprays when the liquid flow rate was lowest at 10 gpm as in Runs 11 and 16. The base case liquid rate scaled down from a commercial FCCU (not in accordance with the invention, but employed safety for the purpose of this example) is 20 gpm. This indicates that spray drop size can be reduced by lowering the liquid feed rate in the commercial FCCU when using a fan nozzle. Higher liquid viscosity gave larger drops as indicated by the drop size data with 1.3 cp (Runs 7, 8, 11) and 2.6 cp (Runs 12, 13, 16) liquids.

The spray dispersion angles obtained from pictures with nozzle no. 3 were in the range of 80° to 110°, while those with nozzle no. 2 were between 25° and 40°. The spray angles with both nozzles were wider with higher gas/liquid ratios.

The nozzle pressure drop, representing energy consumption, was also compared with the three nozzles. The data, shown in Table 1, indicates that ΔP with the nozzle no. 3 was about 33% lower than with nozzle no. 2 at the same gas/liquid flow rates. The effect of liquid viscosity on ΔP was not noticeable in the narrow viscosity range of 1.3 to 2.6 cp.

Reasonably good results were obtained with the exponent m of the Kim and Marshall correlation was taken to be -0.9 to predict the Sauter Mean Diameter (SMD) of the fan nozzle spray. Such data on various flow rates, fluid properties, and nozzle designs and control responses can be used to develop correlations useful for feed injector design and control responses.

## Table 1

### FCCU Feed Nozzle Test Parameters and Test Results

| Nozzle No. | Gas Flowrate scfm | Liquid Flowrate gpm | Liquid Viscosity cp | Vel. @ Throat ft/sec | Nozzle ΔP psi | Spray Angle ° | Sauter Mean Diameter μm |
|---|---|---|---|---|---|---|---|
| 1 | 9.2 | 20 | 1.3 | 100 | 18 | -(4) | 1000+ |
| 1 | 9.2 | 20 | 1.3 | 100 | 18 | -(4) | 1000+ |
| 2 | 18.5 | 20 | 1.3 | 178 | 25 | -(4) | 1000+ |
| 2 | 4.6 | 20 | 1.3 | 62 | 15 | -(4) | 1000+ |
| 2 | 9.2 | 40 | 1.3 | 123 | 51 | -(4) | 1000+ |
| 2 | 9.2 | 10 | 1.3 | 89 | 7 | -(4) | 1000+ |
| 3 | 9.2 | 20 | 1.3 | 100 | 13 | -(4) | 789 |
| 3 | 18.5 | 20 | 1.3 | 178 | 18 | -(4) | 813 |
| 3 | 4.6 | 20 | 1.3 | 62 | 10 | -(4) | 1000+ |
| 3 | 9.2 | 40 | 1.3 | 123 | 36 | -(4) | 1000+ |
| 3 | 9.2 | 10 | 1.3 | 89 | 3 | -(4) | 690 |
| 3 | 9.2 | 20 | 2.6 | 100 | 12 | 80 | 835 |

EP 0 465 161 B1

| Nozzle No. | Gas Flowrate scfm | Liquid Flowrate gpm | Liquid Viscosity cp | Vel. @ Throat ft/sec | Nozzle $\Delta P$ psi | Spray Angle ° | Sauter Mean Diameter $\mu m$ |
|---|---|---|---|---|---|---|---|
| 3 | 18.5 | 20 | 2.6 | 178 | 17 | 110 | 857 |
| 3 | 4.6 | 20 | 2.6 | 62 | 10 | 80 | 1000+ |
| 3 | 9.2 | 32 | 2.6 | 114 | 26 | -(4) | 1000+ |
| 3 | 9.2 | 10 | 2.6 | 89 | 3 | 95 | 773 |
| 2 | 9.2 | 20 | 2.6 | 100 | 18 | 35 | 1000+ |
| 2 | 18.5 | 20 | 2.6 | 178 | 25 | 40 | 1000+ |
| 2 | 4.6 | 20 | 2.6 | 62 | 15 | 35 | 1000+ |
| 2 | 9.2 | 38 | 2.6 | 121 | 49 | -(4) | 1000+ |
| 2 | 9.2 | 10 | 2.6 | 89 | 7 | 25 | 1000+ |

<u>Example 2</u>

This example illustrates a temperature control scheme for an fluid coking with gasification process unit according to the present invention. Although the description was written for application to a particular fluid coking with gasification unit, application to other fluid hydrocarbon conversion and cracking units will be appreciated by those skilled in the art. The following information in Tables 2, 3, and 4 below are used in the control scheme. (Units of klb/hr, °F, psi, and psig are obtained by calculation. Instrument Tag ID numbers for a particular plant are shown.) Ten feed injectors are assumed to be in service for purposes of illustration in this example. Unit specific conditions would dictate the actual number of feed injectors in service.

Table 2

| Process Information Available from the Unit Instrumentation | |
|---|---|
| Instrument ID | Description |
| FC-F2005-IC | Reactor Injection Steam Rate |
| FC-F2004-RC | Reactor Total Feed Rate |
| FC-F2216-IC | Reactor Product (HKCO) Recycle Rate |
| FC-F2224-IC | Bottoms ("Slurry") Recycle Rate |
| FC-F2203-I | Total Fresh Feed Rate |
| FC-T2214-RC | Total Fresh Feed Temperature |
| FC-T2248-I | Total Fresh Feed Temperature |
| FC-P2099-dRC (A to J) | Feed Injector Nozzle Pressure Drop |
| FC-Z2099-I (A to J) | Feed Injector Nozzle Insert Position |
| FC-P2005-dR | Reactor Riser Differential Pressure |
| FC-P2001-R | Reactor Top Pressure |
| FC-P2002-dRC | Reactor/Heater Differential Pressure |
| FC-H2004-IC | Throttling Hot Coke Slide Valve Position |
| FC-P2010-dRC | Throttling Hot Coke Slide Valve Differential Pressure |
| FC-T2001-RC | Reactor Temperature |
| FC-F | |

Table 3

| Process Information Calculated by the Control Computer | | |
|---|---|---|
| PMX Variable ID | Definition | Calculation |
| FC-X2000 | Total Recycle to Total Feed Ratio | (F2216 + F2224)/F2004 |
| FC-X2001 | "Slurry" Recycle to Total Feed Ratio | F2224/F2004 |
| FC-X2002 | HKCO Recycle to Total Feed Ratio | F2216/F2004 |
| FC-X2003 | Fresh Feed to Total Feed Ratio | F2203/F2004 |
| FC-X2004 | Total Mass Flow Rate | F2005 + F2203 + F2216 + F2224 |
| FC-X2005 | Est. Nozzle Outlet Pressure | P2005 + P2001 + 14.7 |
| FC-X2006 | Est. Nozzle Inlet Pressure | X2005 + P2099avg |
| FC-P2099avg | Average Nozzle Pressure Drop | (P2099A + P2099B + P2099C + P2099D + P2099E + P2099F + P2099G + P2099H + P2099I + P2099J)/10 |
| FC-X2007 | Nozzle Pressure Ratio | X2006/X2005 |
| FC-X2008 | Average Feed Temperature | (T2214 + T2248)/2 |
| FC-XVAPRF | Estimated Vapor Fraction | (XKFF/11.6) * (0.01 + (0.08/300) * (X2008 - 400)), a GSK- specific estimate |
| FC-X2009 | Estimated HC Vapor Rate | XVAPFR * F2203 |
| FC-X2010 | Estimated Steam Density | (((X2006 + X2005)/2) * 18)/(10.73 * (X2008 + 460)), lb/cf |
| FC-X2011 | Estimated HC Vapor Density | (((X2006 + X2005)/2) * 300 * (11.6/XKFF))/(10.73 * 0.95 * (X2008 + 460)), lb/cf |
| FC-X2012 | Estimated Fresh Feed Density | 62.4 * XFFSG, lb/cf |

13

Table 3   (continued)

| PMX Variable ID | Definition | Calculation |
|---|---|---|
| | Process Information Calculated by the Control Computer | |
| FC-X2013 | Estimated HKCO Density | 62.4 * XHRSC, lb/cf |
| FC-X2014 | Estimated Bottoms Density | 62.4 * XBRSG, lb/cf |
| FC-X2015 | Steam Volume | F2005/X2010 |
| FC-X2016 | HC Vapor Volume | X2009/X2011 |
| FC-X2017 | FF Liquid Volume | (F2203-X2009)/X2012 |
| FC-2018 | HKCO Volume | F2216/X2013 |
| FC-X2019 | Bottoms Volume | F2224/X2014 |
| FC-X2020 | Total Volume | X2015 + X2016 + X2017 + X2018 + X2019 |
| FC-X2021 | Two Phase Mixture Density | (X2015/X2020) * X2010 + (X2016/X2020) * X2011 + (X2017/X2020) * X2012 + (X2018/X2020) * X2013 + ((X2019/X2020) * X2014, lb/cf |
| FC-X2022 | Vapor Phase Density | (X2015/X2020) * X2010 + (X2016/X2020) * X2011, lb/cf |
| FC-X2023 | "y" | (X2009 + F2005)/ X2004 |
| FC-X2024 | "B" | X2023 ** -0.49 |
| FC-X2025 | Sonic Velocity | 68 * (X2024/X2021) * ((XCPCV * ((X2005 + X2006)/2) * X2022)**0.5) |
| FC-X2026 | Throat Average Velocity | X2020/(3600 * XTONAREA) |

The variable XTONAREA is the total nozzle flow area, sq. ft. Individual position of the nozzle insert in each nozzle will allow the flow area in the throat to be calculated for the nozzle geometry. The total flow area available is then calculated based on the number of active nozzles in service.

The throat velocity is compared to the sonic velocity. If the throat velocity is greater than 65% of the sonic velocity, then the sonic flow pressure drop equation is used to calculate a flow coefficient ("CF"). If the throat velocity is less than 65% of sonic, the sub-sonic flow equation is used to calculate a flow coefficient. Sub-sonic "CF" is defined as follows:

$$CF = ((A_o * 2 * X2021 * X2026 * X2026)/P2099avg) ** 0.5$$

Sonic "CF" is defined as follows:

$$CF = ((B_o * 2 * X2021 * X2026 * X2025)/P2099avg) ** 0.5$$

where $A_o$ and $B_o$ are constants which must be determined empirically for each particular nozzle design.

Table 4

| "PMX" Variable ID | Description |
|---|---|
| | Run Plan Specific Information (supplied by the unit operator) |
| FC-XKFF | Fresh Feed Characterization Factor |
| FC-XFFSG | Fresh Feed Specific Gravity |
| FC-XHRSG | HKCO Recycle Specific Gravity |
| FC-XBRSG | Bottoms Recycle Specific Gravity |

A reactor temperature control operating mode will now be described, using the information provided above. A process controller, designated T-2001RC, will reset individual feed injector nozzle controllers to open or close the available flow area to allow more or less total feed to pass into the reactor. The flow coefficient parameter "CF" will be monitored in a fashion to ensure that a good atomization region is being maintained for the majority of the feed injectors. Selected injectors will be manipulated by T-2001RC to influence the process carbon and heat balance and maintain a desired reactor temperature as process conditions change. The primary parameter being controlled in this control scheme is the reactor coke yield and the heat required by the reaction system for the conversion and cracking reactions. The control computer calculated flow coefficient is used as an index to manipulate the process carbon and heat balance, to achieve the target reactor temperature.

Because of potential adverse yield effects, the control of the reactor temperature is broken into two parts: a gross control and a fine tuning/precision control. For the gross control of reactor temperature, when large rampings in target reactor temperature are being called for, either the circulation rate of solid particles and/or the reactor feed preheat temperature will be manipulated. On a typical Flexicoking unit, the throttling slide valve can be manipulated to control reactor temperature. In the control scheme envisioned, when large deviations from target reactor temperature set point are observed(approximately greater than +/- 3°F), then the classical technique for controlling reactor temperature indicated above would be used. For minor deviations in reactor temperature (approx-mately less than +/- 3°F), then the feed injector atomization would be manipulated to control reactor temperature. This allows real time compensation for changes which may occur in other process parameters.

The process feed injector pressure drop reading is a gross indication of feed injector atomization. ( at a constant flow rate through the injectors), but many process factors can and will influence this reading. By applying the subsonic and sonic feed injector pressure drop equations to calculate a flow coefficient,"CF", a more representative indication of feed atomization is obtained. This allows flexibility for more intelligent control decisions and hierarchy to be applied to the fluid coking with gasification process to achieve target operating objectives. Also, control of the feed injector atomization can achieve a much more precise control compared to throttling large solid particle flows through a slide valve or manipulation of feed preheat duty.

For a multiple nozzle feed injector configuration, manipulating only a portion of the nozzles will provide adequate reactor temperature control. The remaining nozzles would be controlled based on the nozzle P-2099dRC cascade to the nozzle actuator, H-2099-IC. The set point for these PdRCs will be based on run plan specific process objectives consistent with the product yield or quality objectives under control. It is also possible that these remaining nozzles could be incorporated in this yield or quality control in a layered hierarchy. the nozzle flow coefficient, "CF",would be used as a gauge of the current operating band relative to the control objectives. If the "CF", of the portion of the nozzles being manipulated is driven too far from a specific target, then the entire group of feed injector nozzles would be repositioned to a new "CF" level.

For the operating scenario envisioned, roughly 20 % of the reactor total feed rate is manipulated by about 20% of the total number of reactor feed injector nozzles. This percentage of the reactor feed should provide sufficient response to the reaction system carbon balance and reaction system heat load requirement to allow for very precise control of the reactor temperature as indicated by T-2001RC. The remainig 80% of the total reactor feed and 80% of the nozzles are held and controlled to an ooperating region and then manipulated in either an "open loop" or layered hierarchy to achieve the process objectives. The unit specific process objectives will influence the 20%/80% split cited above and this split may be varied in the range from 0% to 100% depending on the individual unit operating objectives. To minimize process disturbances, the 20% of the total number of feed injector nozzles used in this example may be ramped open or closed by moving opposing pairs of nozzles as a unit. (The pairings would typically be as follows: A/ F, B/G, C/H, D/I, and E/J for a reactor system with a total of ten feed injector nozzles). In the stroke range from 36% to 80% each pair of injectors would be moved a maximum of about 10% stroke at a time in response to feed rate changes. This 10% increment corresponds to about 2.7% of the total nozzle throat area being manipulated at one time. Table 5 below illustrates a typical sequential flow area change using this technique:

Table 5

| Start | | | First Step | |
|---|---|---|---|---|
| Nozzle ID | Stroke,% | Throat Area | Stroke, % | Throat Area |
| A | 36 | 5.629 | 46 | 4.859 |
| F | 36 | 5.629 | 46 | 4.859 |
| B | 36 | 5.629 | 36 | 5.629 |
| G | 36 | 5.629 | 36 | 5.629 |
| C | 36 | 5.629 | 36 | 5.629 |
| H | 36 | 5.629 | 36 | 5.629 |
| D | 36 | 5.629 | 36 | 5.629 |
| I | 36 | 5.629 | 36 | 5.629 |
| E | 36 | 5.629 | 36 | 5.629 |
| J | 36 | 5.629 | 36 | 5.629 |
| Total Throat Area = 56.29 | | | 54.75 | |

| | Second Step | | Third Step | |
|---|---|---|---|---|
| Nozzle ID | Stroke,% | Throat Area | Stroke, % | Throat Area |
| A | 46 | 4.859 | 46 | 4.859 |
| F | 46 | 4.859 | 46 | 4.859 |
| B | 46 | 4.859 | 46 | 4.859 |
| G | 46 | 4.859 | 46 | 4.859 |
| C | 36 | 5.629 | 46 | 4.859 |
| H | 36 | 5.629 | 46 | 4.859 |
| D | 36 | 5.629 | 36 | 5.629 |
| I | 36 | 5.629 | 36 | 5.629 |
| E | 36 | 5.629 | 36 | 5.629 |
| J | 36 | 5.629 | 36 | 5.629 |
| | Total Throat Area = 53.21 | | 51.67 | |

Table 5 above illustrates how a very precise flow area control can be maintained and manipulated to achieve the desired level of feed atomization. The above case is an illustration of a controlled ramping closed of the feed injectors, caused by a change/deviation in T-2001RC from its set point. To ramp open the feed injector flow area a reverse sequence would be used.

The control computer application program could be constructed in several different forms. The reactor temperature controller, T-2001RC, could be cascaded directly to the feed injector actuators, H-2099-IC (A to J), or in a layered hierarchy with F-2004-RC cascaded to P-2099-dRC (A to J) which in turn could be cascaded to the individual feed injector actuators, H-2099-IC (A to J). Having individual actuator controllers and PdRC instrumentation on each feed injector provides flexibility for on stream maintenance and control loop tuning of the feed injector system. Lower cost configurations are possible with fewer instruments, and would represent a simplified version of the configuration detailed above.

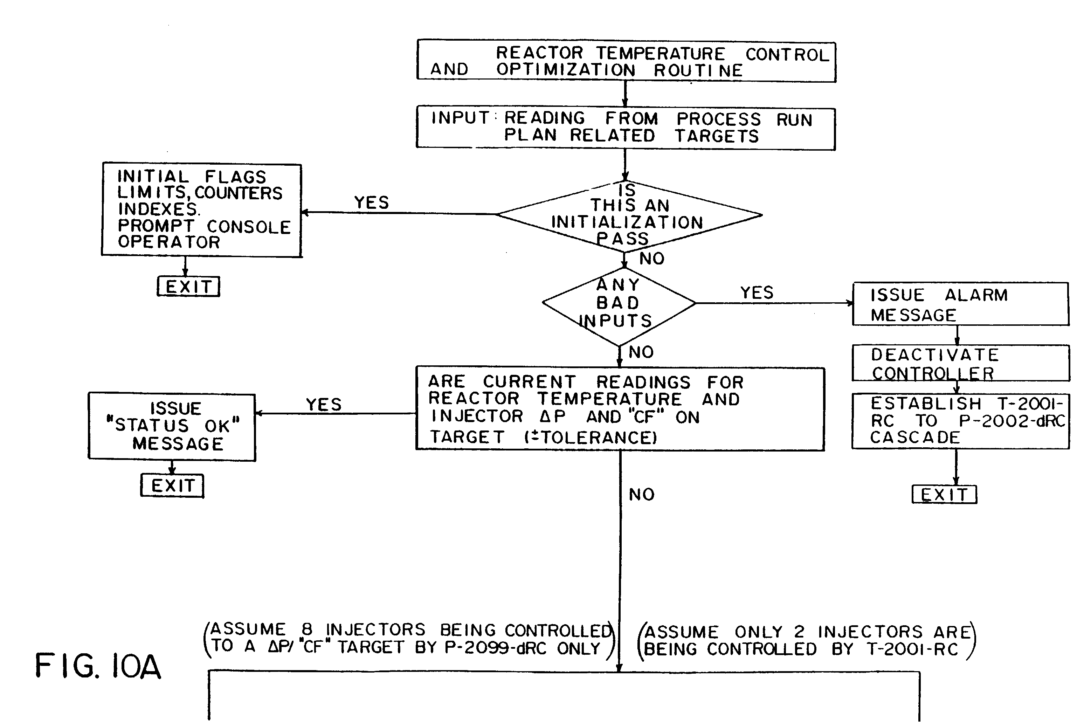

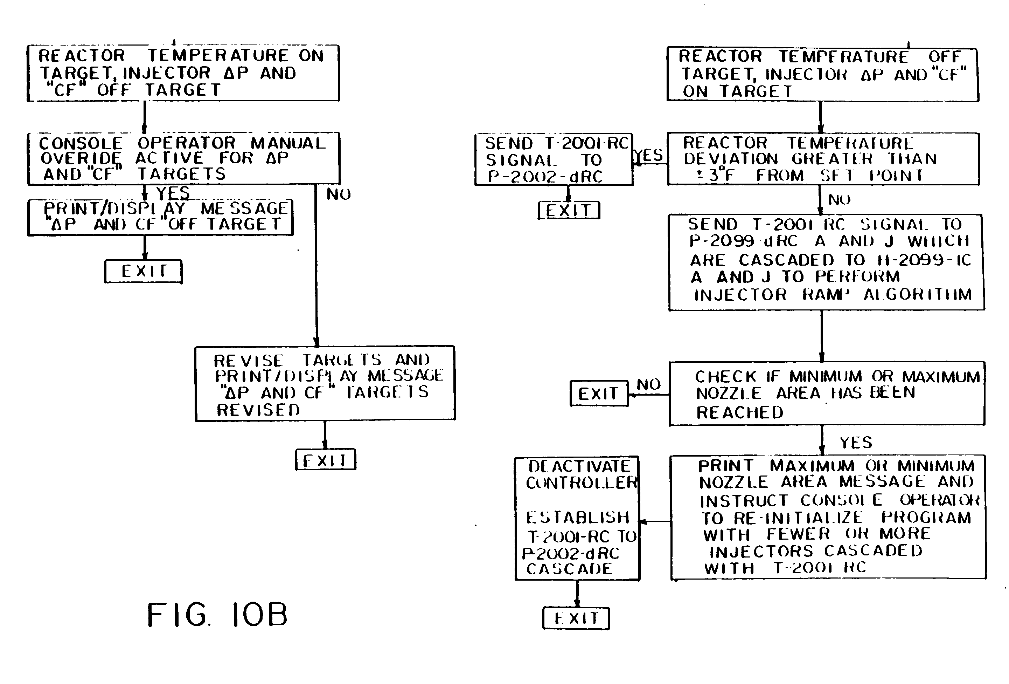

FIG. 10 (parts A and B) is a schematic illustrating the basic structure of a typical control computer application program to vary feed injector throat area based on reactor temperature control requirements as indicated by the T-2001RC controllers. It is based on a reference ten variable atomization means feed injector system with a PdRC controller cascaded to the injector actuator, HIC: P-2099-dRC A cascaded to H-2099-IC A,etc. The reactor temperature controller T-2001RC will generate controller signals in response to changes in the target set point. T-2001RC is cascaded to 20% of the total feed injectors. Console operator-supplied set points for P-2099-dRC (A to J) are based on a unit specific run plan to initialize the system. This set point is consistent with a target spray pattern/ degree of atomization. The calculated flow coefficient "CF" will be calculated in a real time frame. This "CF" will be used as an index of feed atomization.

NOTES

- U.S. patent application serial no. US 486,035 corresponds with European patent application No. EP 91301511.1

- U.S. patent applications serial nos. US 485,701 and 486,046 together correspond with European patent application No. EP 91301510.3

- scfm = standardised cubic feet/minute

- gpm = (U.S.) gallons/minute

- ft = foot

- psi = pounds per square foot

- lb = pound

- squ.ft. = square foot

## Claims

1. A fluidized coker apparatus for the fluidized coking of a hydrocarbon feed and/or hydrocarbonaceous feed, comprising a fluidized coking reactor, at least one feed injector connected to a wall of said reactor, which feed injector is capable of adjusting in a controllable manner the atomization of said feed while installed in said reactor wall, and further comprising a means for monitoring a temperature in the apparatus, a product yield and/or product quality, and further comprising a means for generating a first signal based on said temperature, said product yield and/or product quality, and a controller means operable to respond to said first signal by adjusting the feed atomization produced by said feed injector.

2. The apparatus of claim 1, comprising a means for comparing said first signal to a second signal based on a preselected set point value and adjusting said atomization so to diminish any difference between said first and second signals.

3. The apparatus of claim 1 or claim 2, comprising a means for producing a third signal based on the measured pressure drop $\Delta P$ across the feed injector or portion thereof.

4. The apparatus of claim 3 comprising a controller means for determining, based on said first, second, and third signals, a set point value for pressure drop necessary to achieve either : (a) a desired temperature in the apparatus and/or a desired carbon and heat balance, or (b) a desired yield and/or product quality.

5. The apparatus of claim 3 or claim 4 comprising a controller means for determining, based on said first, second, and third signals, a set point value for the feed injector nozzle atomization means necessary to achieve either : (a) a desired temperature in the apparatus and/or carbon and heat balance, or (b) a desired yield and/or product quality.

6. The apparatus of any one of claims 1 to 5 comprising a means for producing a fourth signal based on the measurements of at least one component of the feed to the feed injector.

7. The apparatus of claim 6 comprising a controller means for determining, based on said first, second, third, and fourth signals a set point value for pressure drop necessary to achieve either : (a) a desired temperature in the apparatus and/or a desired carbon and heat balance, or (b) a desired yield and/or product quality.

8. The apparatus of claim 6 or claim 7 comprising a controller means for determining, based on said first, second, third and fourth signals, a set point value for the feed injector nozzle atomization means necessary to achieve the desired yield and/or product quality.

9. A process for controlling a fluidized coker apparatus for fluidized coking of a hydrocarbon and/or hydrocarbonaceous feed, the apparatus comprising a fluidized coking reaction zone and at least one feed injector for introducing feed into the reaction zone in the form of a spray of atomised droplets, and wherein the injector(s) is/are adjustable to vary the feed droplet size and/or the spray pattern of feed entering the reaction zone, the process comprising: (i) monitoring at least one parameter selected from: (a) a temperature in the apparatus; (b) at least one characteristic of the feed; (c) at least one characteristic (e.g., yield and/or quality) of the product; (d) the yield of at least a selected component in the product; and (e) any combination of two or more of parameters (a) to (d); and (ii) adjusting the said injector(s) to attain a desired value of the selected parameter(s).

10. The process of claim 9 wherein the atomization of said feed injector is accomplished by varying the pressure drop (dP) across the feed injector or a portion thereof to controllably effect the average feed droplet size distribution and/or spray pattern of said feed introduced into the fluidized coking reaction zone.

11. The process of claim 9 or claim 10 wherein the atomization of said feed by said feed injector is varied in real time in response to a signal based on the measured temperature in the apparatus and/or a measured alternative process temperature which is or are indications of process carbon and heat balance.

**Patentansprüche**

1. Wirbelschicht-Kokervorrichtung zum Wirbelschicht-Verkoken von Kohlenwasserstoffeinsatzmaterial und/oder kohlenwasserstoffhaltigem Einsatzmaterial, die einen Wirbelschicht-Verkokungsreaktor, mindestens einen mit einer Wand des Reaktors verbundenen Einsatzmaterialinjektor, wobei der Einsatzmaterialinjektor in der Lage ist, in steuerbarer Weise die Zerstäubung des Einsatzmaterials einzustellen, während er in der Reaktorwand angeordnet ist, ferner Einrichtungen zur Überwachung einer Temperatur in der Vorrichtung, einer Produktausbeute und/oder einer Produktqualität, weiterhin Einrichtungen zur Erzeugung eines ersten Signals auf Basis der Temperatur, der Produktausbeute und/oder der Produktqualität und eine Steuerungsvorrichtung umfaßt, die so betreibbar ist, daß sie auf das erste Signal mit Einstellung der Einsatzmaterialzerstäubung reagiert, die der Einsatzmaterialinjektor erzeugt.

2. Vorrichtung nach Anspruch 1, die eine Einrichtung zum Vergleichen des ersten Signals mit einem zweiten Signal auf Basis eines vorgewählten Einstellungspunktwerts und zur Einstellung der Zerstäubung umfaßt, um so jeglichen Unterschied zwischen dem ersten und zweiten Signal zu verringern.

3. Vorrichtung nach Anspruch 1 oder Anspruch 2, die eine Einrichtung zur Erzeugung eines dritten Signals auf Basis des gemessenen Druckabfalls $\Delta P$ über dem Einsatzmaterialinjektor oder einem Teil desselben umfaßt.

4. Vorrichtung nach Anspruch 3, die eine Steuerungsvorrichtung zur Bestimmung, basierend auf den ersten, zweiten und dritten Signalen, eines Einstellungspunktwerts für den Druckabfall umfaßt, der notwendig ist, um (a) eine gewünschte Temperatur in der Vorrichtung und/oder eine gewünschte Kohlenstoff- und Wärmebilanz oder (b) eine gewünschte Ausbeute und/oder Produktqualität zu erreichen.

5. Vorrichtung nach Anspruch 3 oder Anspruch 4, die eine Steuerungsvorrichtung zur Bestimmung, basierend auf den ersten, zweiten und dritten Signalen, eines Einstellungspunktwerts für die Einsatzmaterialinjektordüsenzerstäubungsvorrichtung umfaßt, der notwendig ist, um (a) eine gewünschte Temperatur in der Vorrichtung und/oder eine gewünschte Kohlenstoff- und Wärmebilanz oder (b) eine gewünschte Ausbeute und/oder Produktqualität zu erreichen.

6. Vorrichtung nach einem der Ansprüche 1 bis 5, die eine Einrichtung zur Erzeugung eines vierten Signals basierend auf den Messungen von mindestens einer Komponente des Einsatzmaterials für den Einsatzmaterialinjektor umfaßt.

7. Vorrichtung nach Anspruch 6, die eine Steuerungsvorrichtung zur Bestimmung, basierend auf den ersten, zweiten, dritten und vierten Signalen, eines Einstellungspunktwerts für den Druckabfall umfaßt, der notwendig ist, um (a) eine gewünschte Temperatur in der Vorrichtung und/oder eine gewünschte Kohlenstoff- und Wärmebilanz oder (b) eine gewünschte Ausbeute und/oder Produktqualität zu erreichen.

8. Vorrichtung nach Anspruch 6 oder Anspruch 7, die eine Steuerungsvorrichtung zur Bestimmung, basierend auf den ersten, zweiten, dritten und vierten Signalen, eines Einstellungspunktwerts für die Einsatzmaterialinjektordüsenzerstäubungsvorrichtung umfaßt, der notwendig ist, um die gewünschte Ausbeute und/oder Produktqualität zu erreichen.

9. Verfahren zur Steuerung einer Wirbelschicht-Kokervorrichtung zum Wirbelschicht-Verkoken von Kohlenwasserstoffeinsatzmaterial oder kohlenwasserstoffhaltigem Einsatzmaterial, wobei die Vorrichtung eine Wirbelschicht-Verkokungsreaktionszone und mindestens einen Einsatzmaterialinjektor zur Einbringung von Einsatzmaterial in die Reaktionszone in Form eines Sprühnebels von zerstäubten Tröpfchen umfaßt, und wobei der Injektor bzw. die Injektoren einstellbar ist bzw. sind, um die Tröpfchengröße des Einsatzmaterials und/oder das Sprühmuster von in die Reaktionszone eintretendem Einsatzmaterial zu verändern, wobei in dem Verfahren (i) mindestens ein Parameter ausgewählt aus (a) einer Temperatur in der Vorrichtung, (b) mindestens einem Charakteristikum des Einsatzmaterials, (c) mindestens einem Charakteristikum (z. B. Ausbeute und/oder Qualität) des Produkts, (d) der Ausbeute von mindestens einer gewählten Komponente in dem Produkt und (e) jeglicher Kombination von zwei oder mehreren der Parameter (a) bis (d) überwacht wird und (ii) der Injektor/die Injektoren eingestellt wird bzw. werden, um einen gewünschten Wert des gewählten Parameters/der gewählten Parameter zu erzielen.

10. Verfahren nach Anspruch 9, bei dem die Zerstäubung des Einsatzmaterialinjektors durch Veränderung des Druckabfalls (dP) über dem Einsatzmaterialinjektor oder einem Teil desselben bewirkt wird, um steuerbar die durchschnittliche Einsatzmaterialtröpfchengrößenverteilung und/oder das Sprühmuster des in die Wirbelschicht-Verkokungsreaktionszone eingebrachten Einsatzmaterials zu beeinflussen.

11. Verfahren nach Anspruch 9 oder Anspruch 10, bei dem die Zerstäubung des Einsatzmaterials durch den Einsatzmaterialinjektor in Echtzeit in Reaktion auf ein Signal verändert wird, das auf der gemessenen Temperatur in der Vorrichtung und/oder einer gemessenen alternativen Verfahrenstemperatur basiert, die Anzeichen für die Kohlenstoff- und/oder Wärmebilanz des Verfahrens ist oder sind.

**Revendications**

1. Appareillage de cokéfaction en lit fluidisé pour la cokéfaction en lit fluidisé d'une charge d'alimentation d'hydrocarbures et/ou d'une charge d'alimentation hydrocarbonée, comprenant un réacteur de cokéfaction en lit fluidisé, au moins un injecteur d'alimentation raccordé à une paroi dudit réacteur, ledit injecteur d'alimentation étant à même d'ajuster de manière réglable l'atomisation de ladite charge d'alimentation tandis qu'il est installé dans ladite paroi du réacteur, et comprenant par ailleurs un moyen pour contrôler une température dans l'appareillage, un rendement de produit et/ou une qualité de produit, et comprenant en outre un moyen pour générer un premier signal basé sur ladite température, ledit rendement de produit et/ou ladite qualité de produit, et un moyen de commande qui est à même de réagir audit premier signal en ajustant l'atomisation de la charge d'alimentation produite par ledit injecteur d'alimentation.

2. Appareillage selon la revendication 1, comprenant un moyen pour comparer ledit premier signal à un deuxième signal basé sur une valeur présélectionnée du point de consigne et pour ajuster ladite atomisation de manière à réduire la différence éventuelle entre le premier et le deuxième signal.

3. Appareillage selon la revendication 1 ou 2, comprenant un moyen pour produire un troisième signal basé sur la chute de pression mesurée ΔP à travers l'injecteur d'alimentation ou une partie de celui-ci.

4. Appareillage selon la revendication 3, comprenant un moyen de commande pour déterminer, sur la base desdits premier, deuxième et troisième signaux, une valeur du point de consigne pour la chute de pression nécessaire pour obtenir (a) une température souhaitée dans l'appareillage et/ou un équilibre souhaité du carbone et de la chaleur, ou (b) un rendement de produit souhaité et/ou une qualité de produit souhaitée.

5. Appareillage selon la revendication 3 ou 4, comprenant un moyen de commande pour déterminer, sur la base desdits premier, deuxième et troisième signaux, une valeur du point de consigne pour le moyen d'atomisation de la buse de l'injecteur d'alimentation nécessaire pour obtenir (a) une température souhaitée dans l'appareillage et/ou un équilibre souhaité du carbone et de la chaleur, ou (b) un rendement de produit souhaité et/ou une qualité de produit souhaitée.

6. Appareillage selon l'une quelconque des revendications 1 à 5, comprenant un moyen pour produire un quatrième signal sur la base des mesures d'au moins un composant de la charge d'alimentation de l'injecteur d'alimentation.

7. Appareillage selon la revendication 6, comprenant un moyen de commande pour déterminer, sur la base desdits premier, deuxième, troisième et quatrième signaux, une valeur du point de consigne pour la chute de pression nécessaire pour obtenir (a) une température souhaitée dans l'appareillage et/ou un équilibre souhaité du carbone et de la chaleur, ou (b) un rendement de produit souhaité et/ou une qualité de produit souhaitée.

8. Appareillage selon la revendication 6 ou 7, comprenant un moyen de commande pour déterminer, sur la base desdits premier, deuxième, troisième et quatrième signaux, une valeur du point de consigne pour le moyen d'atomisation de la buse de l'injecteur d'alimentation nécessaire pour obtenir le rendement de produit souhaité et/ou la qualité de produit souhaitée.

9. Procédé de commande d'un appareillage de cokéfaction à lit fluidisé pour la cokéfaction en lit fluidisé d'une charge d'alimentation d'hydrocarbures et/ou d'une charge d'alimentation hydrocarbonée, l'appareillage comprenant une zone réactionnelle de cokéfaction en lit fluidisé et au moins un injecteur d'alimentation pour introduire une charge d'alimentation dans la zone réactionnelle sous forme de pulvérisation de gouttelettes atomisées et dans lequel le ou les injecteurs est ou sont ajustables pour faire varier le taille et/ou le motif de pulvérisation des gouttelettes de la charge d'alimentation pénétrant dans la zone réactionnelle, le procédé comprenant les étapes consistant (i) à contrôler au moins un paramètre choisi parmi (a) une température dans l'appareillage, (b) au moins une caractéristique de la charge d'alimentation, (c) au moins une caractéristique (par exemple le rendement ou la qualité) du produit, (d) le rendement d'au moins un composant sélectionné du produit, et (e) n'importe quelle combinaison de deux ou plusieurs des paramètres (a) à (d); et (ii) à ajuster le ou lesdits injecteurs pour obtenir une valeur souhaitée du ou desdits paramètres sélectionnés.

10. Procédé selon la revendication 9, dans lequel l'atomisation par ledit injecteur d'alimentation est obtenue en faisant varier la chute de pression (dP) à travers l'injecteur d'alimentation ou d'une partie de celui-ci afin d'affecter de manière réglable la distribution de tailles moyenne et/ou le motif de pulvérisation moyen des gouttelettes de ladite charge d'alimentation introduite dans la zone réactionnelle de cokéfaction en lit fluidisé.

11. Procédé selon la revendication 9 ou 10, dans lequel l'atomisation de ladite charge d'alimentation par ledit injecteur d'alimentation est modifiée en temps réel en réponse à un signal basé sur la température mesurée dans l'appareillage et/ou sur une autre température mesurée du procédé qui est, ou sont, des indications de l'équilibre de carbone et de chaleur du procédé.

PRIOR ART
FIG. I

FIG. 2A

FIG. 2B

FIG. 3

FIG. 4

FIG. 5

FIG. 6

FIG. 7

FIG. 8

FIG. 8B

FIG. 9

EP 0 465 161 B1

REACTOR TEMPERATURE CONTROL AND OPTIMIZATION ROUTINE

INPUT READING FROM PROCESS RUN PLAN RELATED TARGETS

IS THIS AN INITIALIZATION PASS

INITIAL FLAGS LIMITS, COUNTERS INDEXES. PROMPT CONSOLE OPERATOR

EXIT

ANY BAD INPUTS

ISSUE ALARM MESSAGE

DEACTIVATE CONTROLLER

ESTABLISH T-2001-RC TO P-2002-dRC CASCADE

EXIT

ARE CURRENT READINGS FOR REACTOR TEMPERATURE AND INJECTOR $\Delta P$ AND "CF" ON TARGET ($\pm$TOLERANCE)

ISSUE "STATUS OK" MESSAGE

EXIT

NO

(ASSUME 8 INJECTORS BEING CONTROLLED TO A $\Delta P$/"CF" TARGET BY P-2099-dRC ONLY)

(ASSUME ONLY 2 INJECTORS ARE BEING CONTROLLED BY T-2001-RC)

FIG. 10A

EP 0 465 161 B1

EP 0 465 161 B1

REACTOR TEMPERATURE ON
TARGET, INJECTOR ΔP AND
"CF" OFF TARGET

CONSOLE OPERATOR MANUAL
OVERIDE ACTIVE FOR ΔP
AND "CF" TARGETS

YES

PRINT/DISPLAY MESSAGE
"ΔP AND CF" OFF TARGET

NO

EXIT

REVISE TARGETS AND
PRINT/DISPLAY MESSAGE
"ΔP AND CF" TARGETS
REVISED

EXIT

FIG. IOB

REACTOR TEMPERATURE OFF
TARGET, INJECTOR ΔP AND "CF"
ON TARGET

SEND T-2001-RC
SIGNAL TO
P-2002-dRC

YES

REACTOR TEMPERATURE
DEVIATION GREATER THAN
±3°F FROM SET POINT

EXIT

NO

SEND T-2001 RC SIGNAL TO
P-2099-dRC A AND J WHICH
ARE CASCADED TO H-2099-IC
A AND J TO PERFORM
INJECTOR RAMP ALGORITHM

EXIT

NO

CHECK IF MINIMUM OR MAXIMUM
NOZZLE AREA HAS BEEN
REACHED

YES

DEACTIVATE
CONTROLLER

ESTABLISH
T-2001-RC TO
P-2002-dRC
CASCADE

PRINT MAXIMUM OR MINIMUM
NOZZLE AREA MESSAGE AND
INSTRUCT CONSOLE OPERATOR
TO RE-INITIALIZE PROGRAM
WITH FEWER OR MORE
INJECTORS CASCADED
WITH T-2001 RC

EXIT